# EUROPÄISCHE PATENTSCHRIFT

(11) **EP 3 043 946 B1**
(45) Veröffentlichungstag und Bekanntmachung des Hinweises auf die Patenterteilung: **31.05.2023**
(21) Anmeldenummer: 14758506.1
(22) Anmeldetag: 02.09.2014
(51) Int. Cl.: B23F 5/16, B23C 5/28, B23Q 11/10

(54) **KÜHLMITTELZUFUHR UND DAMIT AUSGESTATTETE WALZSCHÄLMASCHINE SOWIE DAMIT AUSGEFÜHRTES WÄLZSCHÄLVERFAHREN**
COOLANT SUPPLY AND SKIVING MACHINE EQUIPPED THEREWITH, AND SKIVING METHOD CARRIED OUT THEREWITH
DISPOSITIF D'ALIMENTATION EN RÉFRIGÉRANT, MACHINE DE TAILLAGE EN DÉVELOPPANTE ÉQUIPÉE DE CE DISPOSITIF ET PROCÉDÉ DE TAILLAGE EN DÉVELOPPANTE AU MOYEN DE CE DISPOSITIF

(30) Priorität: 13.09.2013 DE 102013015252
(43) Veröffentlichungstag der Anmeldung: 20.07.2016
(73) Patentinhaber: Gleason-Pfauter Maschinenfabrik GmbH, 71636 Ludwigsburg (DE)
(72) Erfinder: LIEPELT, Ralf, 06333 Hettstedt (DE); WEPPELMANN, Edgar, 71679 Asperg (DE)
(74) Vertreter: Leinweber & Zimmermann
(86) Internationale Anmeldenummer: PCT/EP2014/002369
(87) Internationale Veröffentlichungsnummer: WO 2015/036098

(56) Entgegenhaltungen:
- EP-A1- 2 517 815
- EP-A1- 2 520 396
- EP-A1- 2 537 615
- JP-A- S5 721 217
- JP-A- 2001 138 107
- JP-A- 2004 276 136
- US-A- 2 080 401
- US-A- 5 290 135
- US-A1- 2009 226 268

## Beschreibung

Die Erfindung betrifft eine Vorrichtung mit einem Schälrad und einer Kühlmittelzufuhr zum Zuführen eines der Abfuhr der beim Wälzschälen einer Verzahnung mittels des um seine Rotationsachse rotierenden Schälrads erzeugten Wärme dienenden Kühlmittels.

Kühlmittelzufuhren sind selbstverständlich bekannt. Beim Wälzschälen von Verzahnungen, auch Power-Skiving genannt, werden aufgrund der vergleichsweise hohen Rotationsgeschwindigkeiten des Schälrads bei der spanenden Materialabnahme vom Werkstück sehr viele auch kleinere Späne erzeugt. Die dabei erzeugte Wärme wird über ein Kühlmittel abgeführt, das beispielsweise ein Fluid in Form eines Kühlöls sein kann; geeignete Kühlmittel sind dem Fachmann hierzu ebenfalls bekannt. Auch das Wälzschälverfahren selbst ist dem Fachmann wohlbekannt; eine gute Zusammenfassung dieses Verfahrens findet sich beispielsweise in EP 2 537 615 A1.

Bei bekannten Power-Skiving-Maschinen beispielsweise zur Bearbeitung von Innenverzahnungen wird die Zufuhr von Kühlmittel zu dem Zerspanungsbereich um das Werkzeug herumgelegt. Für solche Maschinen geeignete Kühlmittelzufuhren sind dabei üblicherweise so gestaltet, daß eine Kühlölleitung bis auf die Höhe des Schälrades verlegt wird, so daß mit einer oder mehreren Freistrahldüsen das von außen zugeführte Kühlöl in etwa in der Ebene des Außendurchmessers des Schälrads auf den Zerspanungsbereich gerichtet werden kann.

Es hat sich jedoch herausgestellt, daß es, insbesondere bei der Bearbeitung von Innenverzahnungen, bei diesen Kühlmittelzufuhren aus dem bekannten Stand der Technik immer wieder zu Schwierigkeiten bei der Einstellung kommt und teilweise Beschädigungen der Kühlmittelleitungen festzustellen sind, die dann aufwendig zu beheben sind.

US 2009/226268 A1, die die Basis für den Oberbegriff des Anspruchs 1 bildet, offenbart ein nicht rotierend oder rotierend einsetzbares Schneidwerkzeug mit einer internen Fluidführung.

Der Erfindung liegt die Aufgabe zugrunde, eine Vorrichtung der eingangs genannten Art bereitzustellen, die hinsichtlich der Zuverlässigkeit verbessert ist oder wenigstens eine vereinfachte Handhabung des Gesamtsystems aus Kühlmittelzufuhr und Wälzschälmaschine erlaubt.

Diese Aufgabe wird von der Erfindung gelöst durch eine Vorrichtung mit den Merkmalen von Anspruch 1. Weitere bevorzugte Ausgestaltungen sind in den abhängigen Ansprüchen und nebengeordneten Ansprüchen angegeben sowie in der nachfolgenden Beschreibung erläutert.

In der nachfolgenden Beschreibung wird oftmals vereinfachend von der Kühlmittelzufuhr gesprochen, die sich auf eine Kühlmittelzufuhr der auch das Schälrad aufweisenden Vorrichtung bezieht.

Im Rahmen der Erfindung ist nämlich erkannt worden, daß die bislang verwendete Kühlmittelzufuhr insbesondere bei der Bearbeitung von Innenverzahnungen zum einen eine werkstückabhängige Anpassung der Kühlölleitungen erforderlich macht, um den Kühlölstrom geeignet auf den Zerspanungsbereich richten zu können, wodurch das Risiko von Kollisionen der Kühlölleitung mit dem Werkstück erhöht wird. Des weiteren ist erkannt worden, daß aufgrund des relativ kompakten Gesamtbauraums der Wälzschälmaschine ein beabsichtigter Werkzeugwechsel oder Werkzeughalterwechsel durch die nahegelegene Kühlölleitung erschwert wird. Denn insbesondere bei einer gegebenenfalls erforderlichen Neueinstellung der Kühlölzuführung wird nach einem Werkzeugwechsel die dazu erforderliche Sorgfalt des Bedieners nicht immer ausreichend aufgebracht, so daß es bei unsachgemäßer Neueinstellung zu einem weniger erfolgreichen Bearbeitungsprozeß oder sogar zu Kollisionen zwischen der Kühlölleitung und dem Werkstück oder einer Spannvorrichtung kommen kann, die die Leitung beschädigen.

Erfindungsgemäß erfolgt die Zuführung des Kühlmittels dagegen von der Seite des Werkzeuges (Schälrads) her. Durch den in Projektion auf die Normalenebene der Rotationsachse gesehen achsnäher als die Schälradverzahnung angeordneten Zuführabschnitt erfolgt die Zuleitung des Kühlmittels geometrisch gesehen von innerhalb des Schälrad-/Schälradhalterverbundes her und nicht wie im Stand der Technik von außen. Entsprechend sind die im Rahmen der Erfindung als störend erkannten äußeren, der Kühlung dienenden Leitungen nicht mehr erforderlich. Auf diese Weise können auch bei Bedarf automatische Werkzeugwechsel einfacher durchgeführt werden. Auch bedienerseitig ist die oben angesprochene Sorgfalt nicht mehr erforderlich, und Beschädigungen von Kühlölleitungen, die ja auch zu Maschinenausfallzeiten führen können, werden zuverlässig vermieden.

Während die Vorteile der Erfindung besonders beim Wälzschälen von Innenverzahnungen zur Geltung kommen, ist die Erfindung nicht diesbezüglich eingeschränkt und betrifft ebenfalls das Wälzschälen außenverzahnter Werkstücke. Des weiteren schließt die Erfindung den Einsatz äußerer Ölzufuhren nicht aus. So können beispielsweise noch externe Spülöldüsen vorgesehen werden, um Späne aus bereits geschnittenen Lücken zu spülen (in einem vergleichsweise größeren Abstand, da das "Treffen" nur der Verzahnung einfacher zu erreichen ist).

Grundsätzlich ist es durchaus denkbar, daß der erste Zuführabschnitt räumlich fest steht, beispielsweise in Form einer Leitung, die zentral durch eine dann als Hohlspindel ausgeführte Werkzeugspindel sowie den hohl ausgeführten Werkzeughalter durch eine Bohrung des Schälrades hindurchragt und danach durch eine geeignete Geometrie gezielt auf den Zerspanungsbereich gerichtet wird. In einer besonders bevorzugten Ausführungsform der Erfindung soll der erste Zuführabschnitt jedoch mit dem Schälrad mitrotieren. Dies erlaubt eine einfachere Werkzeugspindelgestaltung sowie auch eine einfachere Aufspannung, insbesondere im Hinblick auf die hohen Drehzahlen beim Wälzschälen. Zum anderen kann auch die Zentrifugalkraft mit ausgenutzt werden, die aufgrund des mitrotierenden ersten Zuführabschnittes auf das Kühlmittel einwirkt.

Zweckmäßig führt der erste Zuführabschnitt durch das Schälrad hindurch. An dieser Stelle ist es wichtig anzumerken, daß der erste Zuführabschnitt als ein Kanal ausgebildet sein kann, aber nicht muß. So ist auch ein in mehrere strömungstechnisch parallele Kanäle aufgespaltener erster Zuführabschnitt möglich. Entsprechend kann bei der Durchführung des ersten Zuführabschnitts durch das Schälrad hindurch eine zentrale Öffnung verwendet werden, aber auch dezentral eine oder mehrere Öffnungen vorgesehen werden.

In einer zweckmäßigen Ausführungsform verläuft der erste Zuführabschnitt wenigstens teilweise auch durch einen das Schälrad haltenden Schälradhalter, liegt also auch im Bereich des Schälradhalters wenigstens teilweise achsnäher als die Schälradverzahnung, wenn in Projektion auf die Normalenebene der Rotationsachse gesehen. Auf diese Weise ist der erste Zuführabschnitt in einen Verbund aus Schälrad und Schälradhalter integriert und kann bei Werkzeugwechsel mit diesem gewechselt werden. Auf diese Weise werden nochmals geringere Anforderungen an die Sorgfalt des Bedieners gestellt, der Werkzeugwechsel kann besonders einfach automatisiert werden.

Grundsätzlich könnte man das Kühlmittel nach Durchführung durch das Werkzeug mittels einer oder mehrerer Freistrahldüsen auf den Zerspanungsbereich lenken. Bei mitrotierendem Zuführabschnitt müßte eine entsprechende Düsenanordnung optimalerweise in alle Richtungen sprühen, also 360° abdecken.

Es wird jedoch auch stromabwärts des ersten Zuführabschnitts noch für eine kontrollierte Führung des Kühlmittels gesorgt. Erfindungsgemäß ist ein zweiter Zuführabschnitt der Kühlmittelzufuhr vorgesehen, der eine bezüglich der Rotationsachse radial von innen nach außen verlaufende Erstreckungskomponente aufweist. Der zweite Zuführabschnitt soll bevorzugt ebenfalls mit dem Schälrad rotieren.

Wie oben bereits angesprochen, wirkt auf das Kühlmittel in der "mitrotierenden Variante" eine Zentrifugalkraft, die dazu beiträgt, daß sich das Kühlmittel radial von innen nach außen bewegt. Dann ist aus diesem Grund auch kein besonderer Kühlöldruck beim Austritt des Kühlöls in der Ebene des Schälrades (d.h. aus dem ersten Zuführabschnitt) erforderlich. In einer besonders bevorzugten Ausführungsform ist die Kühlmittelzufuhr derart gestaltet, daß das Kühlöl dann entlang einer Spanfläche des Schälrads zu deren Schneidkante strömt.

Zweckmäßig ist wenigstens ein Anteil des zweiten Zuführabschnitts symmetrisch bezüglich einer Drehung um die Rotationsachse ausgebildet. Dies sorgt für eine im wesentlichen gleichmäßige Verteilung des Kühlmittels auf die Spanflächen des Schälrads, so daß eine zuverlässige Wärmeabfuhrwirkung beibehalten werden kann. Erfindungsgemäß ist wenigstens ein Teil des zweiten Zuführabschnitts von einer flächigen, an der die Schneidkante tragenden Seite des Schälrads angeordneten Begrenzung begrenzt. Diese kann beispielsweise in Form eines insbesondere drehsymmetrischen Deckels realisiert werden, der bevorzugt leicht konisch geformt ist. Dadurch wird erreicht, daß die Strömungsgeschwindigkeit des entlang der Innenfläche der Begrenzung strömenden Kühlmittels eine Strömungskomponente in Richtung der Rotationsachse erhält, in Richtung auf die Spanflächen des Schälrads.

Die flächige Begrenzung kann sich zweckmäßig bis in den Bereich der Zähne des Schälrades erstrecken. Sie sind im Treppenschliff ausgebildet, der äußere Umfangsrand der flächigen Begrenzung auf den unteren Kanten der Zähne zur Anlage gebracht. Es entstehen dadurch im wesentlichen dreieckige Öffnungen, durch die das Kühlmittel unter Mithilfe der Zentrifugalbeschleunigung mit radialer Hauptströmungskomponente entlang der Spanflächen des Schälrads austritt und dann bis zum Zerspanungsbereich läuft. Das Kühlmittel wird somit gezielt an den Ort seiner Nutzung geleitet.

Je nach konstruktiver Ausgestaltung kann die äußere Umrandung der Flächenbegrenzung auch mit einem Abstand, insbesondere einem einstellbaren Abstand zu den unteren Kanten verlaufen. Wählt man allerdings die Variante des Auflegens, kann über die Befestigung der flächigen Begrenzung dafür gesorgt werden, daß dieses Auflegen unter Krafteinwirkung erfolgt, wodurch die Kanten des Schälrades etwas in den Deckel eindrücken. Auf diese Weise kann auch einem Lösen der Befestigung, beispielsweise beim Beschleunigen/Abbremsen der Werkzeugspindel entgegengewirkt werden.

Bei außerhalb der Erfindung liegenden Schälrädern ohne Treppenschliff müsste entsprechend durch konstruktive Maßnahmen für die erforderlichen Austrittsöffnungen zwischen den axialen Begrenzungen des zweiten Zuführabschnitts, der flächigen Begrenzung und dem Schälrad selbst gesorgt werden. Beispielsweise könnte der Umfang der flächigen Begrenzung Durchgangslöcher aufweisen, etwa so viele, wie das Schälrad Zähne hat (oder wie das Schälrad Teiler hat, durch die sich die Zähnezahl ganzzahlig teilen läßt). Genauso ließe sich ein umlaufender Spalt realisieren, durch einen geeignet eingestellten Abstand zwischen der flächigen Begrenzung und der dieser gegenüberliegenden Schälradseite. Letzteren könnte man beispielsweise über einen geeignet dimensionierten Abstandshalter, beispielsweise eine Hülse realisieren, wobei insbesondere die flächige Begrenzung zwischen eine solche Hülse und eine der Befestigung der Flächenbegrenzung dienende Schraube positioniert und geklemmt werden kann.

In einer zweckmäßigen Ausführungsform ist eine Befestigung der Begrenzung bei einer Höhenänderung des Schälrades nachführbar. Die Höhe des Schälrades ändert sich beispielsweise durch dessen Nachschliff. Durch die Nachführung wird dafür gesorgt, daß sich der Querschnitt der Öffnungen für den radialen Durchtritt des Kühlmittels auf die Spanflächen nicht ändert, unabhängig davon, wie weit das Schälrad bereits nachgeschliffen wurde. Dies kann durch die Auflage / Befestigung der flächigen Begrenzung realisiert werden. Beispielsweise wird eine Befestigungsschraube entsprechend nachgeschraubt, je nachdem, wie groß die aktuelle Höhe des jeweiligen Schälrads gerade ist. Hinsichtlich der oben erläuterten Variante über die Abstandshalter (Hülsen) lassen sich auch unterschiedlich lange Hülsen für unterschiedlich weit nachgeschliffene Schälräder verwenden.

In einer Ausführungsform begrenzt ein Befestigungsmittel für die flächige Begrenzung wenigstens einen Teil des ersten Zuführabschnitts. Das Befestigungsmittel erhält somit eine Doppelfunktion. Es kann insbesondere in Form einer Hohlschraube gebildet sein, deren Gewinde in ein am Schälradhalter vorgesehenes Gegengewinde eingreift. Das Kühlmittel strömt dann in die Hohlschraube und tritt an einer Mehrzahl bevorzugt azimutal äquidistant beabstandeter radialer Austrittsbohrungen aus. In diesem Fall kann der Übergang von überwiegend axialer Hauptströmungsrichtung in überwiegend radiale Hauptströmungsrichtung auch innerhalb des Befestigungsmittels erfolgen. Insbesondere bei dezentraler innerer Kühlmittelführung kann das Befestigungsmittel für die flächige Begrenzung auch einfacher gestaltet werden, beispielsweise durch eine Vollschraube.

Für den Anschluß des ersten Zuführabschnittes der Kühlmittelzufuhr an ein Kühlmittelreservoir/einen Kühlmittelkreislauf wird bevorzugt eine Drehdurchführung eingesetzt. Drehdurchführungen sind dem Fachmann gut bekannt und werden an dieser Stelle nicht weiter beschrieben. Grundsätzlich könnte man eine solche Drehdurchführung auch bereits am Umfang des Schälradhalters realisieren. Aus Gründen der baulichen Einfachheit wird es jedoch bevorzugt, daß die Kühlmittelzufuhr weiter durch eine die Drehbarkeit des Schälrads gewährleistende Werkzeugspindel (ebenfalls bevorzugt mitrotierend), insbesondere auch durch eine das Schälrad oder einen das Schälrad haltenden Schälradhalter aufspannende Spannvorrichtung verläuft. Eine Drehdurchführung kann dann auch am aufspannungsabgewandten Ende der Werkzeugspindel insbesondere zentral vorgesehen werden. Es kann jedoch auch vorgesehen sein, daß die Kühlmittelzufuhr durch die Spindel geht, aber außerhalb der Spannvorrichtung, etwa bei dezentralen Leitungen.

Wie oben bereits erläutert, bilden gemäß der Erfindung das Schälrad nebst seinem Schälradhalter und der darin integrierten Kühlmittelleitung (erster und zweiter Zuführabschnitt) einen Verbund, der als Ganzes beim Werkzeugwechsel gewechselt werden kann. Dementsprechend stellt die Erfindung auch eine Anordnung für das Wälzschälen unter Schutz, aufweisend ein zum Wälzschälen von Verzahnungen ausgelegtes Schälrad, einen das Schälrad haltenden und auf eine Spannvorrichtung einer Wälzschälmaschine aufspannbaren Schälradhalter sowie eine Kühlmittelzufuhr nach einem der oben erläuterten Aspekte, soweit diese (entgegen der Stromrichtung des Kühlmittels gesehen) den Bereich bis zum Schälradhalter betreffen.

Der Anschluß einer solchen Anordnung an eine Wälzschälmaschine mit einer entsprechend passend vorgesehenen Kühlmittelleitung kann dann über eine oder mehrere Steckdichtungen erfolgen, beispielsweise einen oder mehrere Stutzen, der/die in einen die jeweiligen Dichtungen, insbesondere Dichtungsringe aufweisenden Anschlußkanal/kanäle in der Spindel eingesteckt wird/werden.

Des weiteren stellt die Erfindung auch eine mit einer Kühlmittelzufuhr nach einem der vorangehend beschriebenen Aspekte ausgestattete Wälzschälmaschine unter Schutz.

In verfahrenstechnischer Hinsicht wird die Erfindung durch ein Wälzschälverfahren zum Bearbeiten und/oder Erzeugen einer Verzahnung, insbesondere von Innenverzahnungen, und einem Werkstück, bei dem ein rotierendes Schälrad spanend Material von dem Werkstück abnimmt und man zur Abfuhr der dabei erzeugten Wärme Kühlmittel zuführt, gelöst, das im wesentlichen dadurch gekennzeichnet ist, daß die Zufuhr des Kühlmittels über einen insbesondere mit dem Schälrad rotierenden Zuführabschnitt von der Seite des Schälrads her erfolgt, insbesondere aus der Schälradebene her , mittels einer erfindungsgemäßen Vorrichtung.

Die Vorteile des erfindungsgemäßen Verfahrens ergeben sich aus den oben erläuterten Vorteilen der erfindungsgemäßen Kühlmittelzufuhr. Insbesondere soll das Kühlmittel bevorzugt entlang einer Spanfläche des Schälrads zu deren Schneidkanten strömen, also eine kontrolliert geführte Zuleitung des Kühlmittels bis hin zum Zerspanungsbereich vorgenommen werden.

Weitere Merkmale, Vorteile und Einzelheiten der Erfindung ergeben sich aus der nachfolgenden Beschreibung mit Bezug auf die beigelegten Figuren, von denen
- Fig. 1: einen Verbund aus Schälradhalter und Schälrad mit integrierter Kühlmittelzufuhr zeigt, und
- Fig. 2: den Verbund aus Fig. 1 in seiner Aufspannung auf einer Werkzeugspindel zeigt.

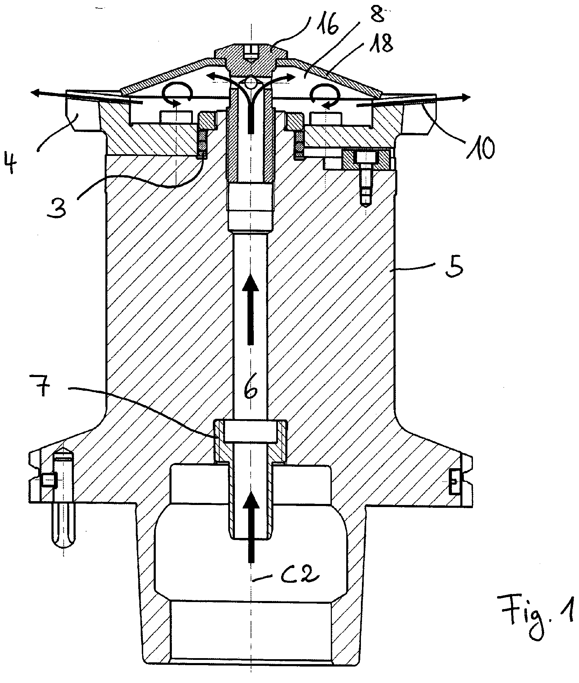

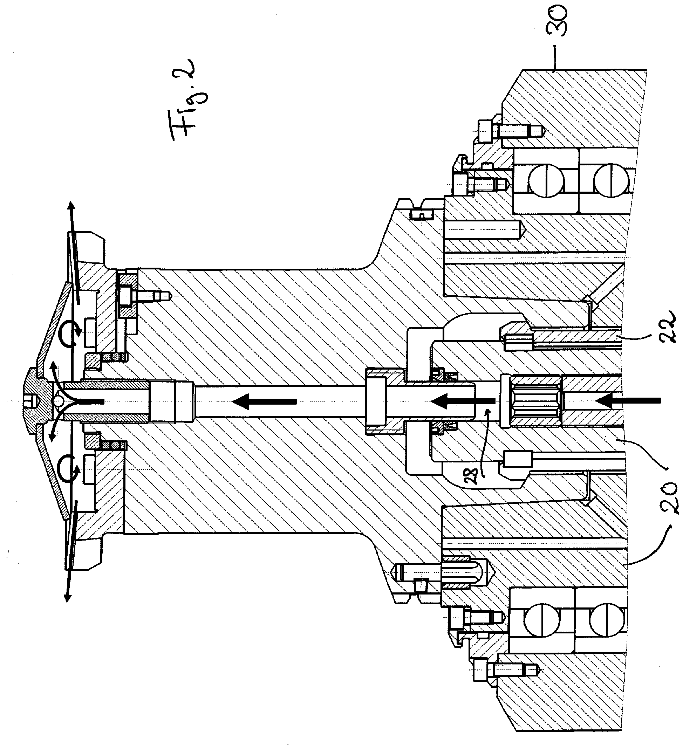

Fig. 1 zeigt im Axialschnitt einen Schälradhalter 5, auf den in per se bekannter Weise ein Schälrad 2 aufgespannt ist, welches zur Bearbeitung und/oder Erzeugung von Verzahnungen an Werkstücken im Wälzschälverfahren ausgelegt sind. Die Verzahnung des Schälrads 2 ist in Fig. 1 mit dem Bezugszeichen 4 bezeichnet. Auf der dem Schälrad abgewandten Seite weist der Schälradhalter 5 eine zur Aufspannung auf einer Werkzeugspindel geeignete Struktur auf. In diesem Ausführungsbeispiel besteht diese aus einer planaren Auflagefläche sowie einem konischen Vorsprung, der zur Festspannung in einer entsprechend konisch ausgeführten Ausnehmung auf der Werkzeugspindel selbst eine Ausnehmung und an deren Innenwand Anlageflächen für Spannzangen einer Spanneinrichtung aufweist (siehe auch Fig. 2). Es könnten aber auch andere Arten von Aufspannungen verwendet werden; die gezeigte entspricht einer dem Fachmann geläufigen und von ihm häufig verwendeten Aufspannung.

Das Schälrad 2 weist eine zentrale axiale Bohrung auf, mit der es auf eine Nabe des Schälradhalters 5 aufgesetzt ist, wobei zur Zentrierung bei der Montage eine Kugelbüchse 3 zwischengesetzt ist. In diesem Ausführungsbeispiel ist das Schälrad 2 nicht auf den Schälradhalter aufgespannt, sondern mittels Schrauben daran befestigt, die in der Schnittdarstellung von Fig. 1 nicht erkennbar sind. (Man sieht nur die Schraubenköpfe, aber keinen Schnitt durch die Schrauben.)

In diesen gezeigten Verbund aus Schälradhalter 5 und Schälrad 2 ist eine Kühlmittelzufuhr integriert. Dazu weist der Schälradhalter 5 eine zentrale Bohrung 6 auf, die sich koaxial zur Rotationsachse C2 des Schälrades durchgehend erstreckt und an dem schälradseitigen Ende ein Gewinde aufweist. Die Bohrung 6 bildet mit dem Inneren einer in das Gewinde eingeschraubten Hohlschraube 16 einen zentralen Leitungskanal für das Kühlmittel, der bis auf die Seite des Schälrades 2 reicht, an der die Spanflächen 10 und Schneidkanten des Schälrades 2 angeordnet sind.

Es versteht sich, daß die Durchführung des Kühlmittels durch den Schälradhalter 5 und das Schälrad 2 hindurch auch durch eine andere Leitungsführung realisierbar ist, beispielsweise auch durch dezentrale Leitungen, nicht parallel zur Rotationsachse C2 verlaufende Leitungen verzweigte Leitungen oder ähnliches.

Nach Durchströmen des Schälradhalters 5 entlang der durch die Pfeile angezeigten Strömungsrichtung gelangt das Kühlmittel, beispielsweise ein Kühlöl, durch vier radiale Bohrungen 17, von denen in Fig. 1 nur zwei gezeigt und die andere angedeutet ist, radial zur Rotationsachse C2 aus der Hohlschraube 16 heraus in den oberhalb der die Spanflächen 10 tragenden Seite des Schälrades 2 gelegenen Raum. Dort unterliegen sie allerdings noch keiner Bewegung, die das Kühlöl aufgrund der darauf einwirkenden Zentrifugalkraft ungehindert radial nach außen ausüben würde. Vielmehr ist ein Deckel 18 vorgesehen, der von der Hohlschraube 16 gehalten wird und an seinem äußeren Umfang auf den Kanten der Verzahnung 4 aufliegt. Bei dem dargestellten Ausführungsbeispiel ist letztere im Treppenschliff gebildet, so daß an jedem Zahn zwischen dem äußeren Umfang des Deckels 18 und den Spanflächen eine dreieckige Öffnung gebildet ist, durch welche das Kühlöl radial austritt und schließlich entlang der Spanflächen 10 zu den Schneidkanten des Schälrades 2 strömt. Dies ist durch die radial nach außen weisenden Pfeile angedeutet.

Der Deckel 18 ist von konischer Grundform, oder anders ausgedrückt von der Grundform eines Kugeloberflächenabschnitts, so daß er einerseits das aus den in diesem Ausführungsbeispiel vier radialen Bohrungen der Hohlschraube 16 austretende Kühlöl gleichmäßig über den vollen Umfang verteilt und zudem direkt auf die Spanflächen 10 leitet. So kollidiert der Deckel bei Nachsetzen nachgeschärfter Werkzeuge auch nicht mit den Schraubenköpfen. Aufgrund der hohen Drehgeschwindigkeiten des Schälradhalters 5/Schälrads 2 beim Wälzschälen mögen sich zudem im Raum zwischen dem Deckel 18 und der gegenüberliegenden Schälradoberfläche turbulente Strömungen ausbilden, wie durch die beiden einen Wirbel andeutenden Pfeile illustriert. Dadurch verteilt sich das Kühlöl gleichmäßiger in dem Hohlraum. In jedem Fall wird jedoch ein konstanter Kühlölstrom mit ausreichender Strömungsgeschwindigkeit entlang der Spanflächen 10 erzeugt, durch die ausreichend zugeführte Ölmenge/Zeit und durch die Zentrifugalkraft. Aufgrund der ausnutzbaren Zentrifugalkraft ist zudem kein nennenswerter zusätzlicher Druck im Kühlleitungssystem über den zur Bereitstellung eines erwünschten Kühlmittelflusses erforderlichen Druck hinaus erforderlich.

Bei der gezeigten Ausführungsform ist keine Abstandsbuchse der oben erläuterten Art vorgesehen, um einen Abstand zwischen dem äußeren Umfang des Deckels 18 und den Zahnkanten einzustellen, da die aufgrund des Treppenschliffs der Verzahnung 4 vorhandenen Durchgangslöcher für einen ausreichenden Zustrom ausreichend sind. Die Querschnittsfläche der Austrittsöffnungen läßt sich allerdings noch anderweitig herstellen oder modifizieren, insbesondere durch eine Abstandsbuchse, die sich um die Hohlschraube 16 legen läßt, wobei selbstverständlich die radialen Durchtrittsbohrungen 17 frei bleiben. Auf diese Weise ist die Querschnittsfläche des radialen Ausgangs des zweiten Zuführabschnitts einstellbar. Im Falle ohne Treppenschliff können alternativ oder zusätzlich Löcher im Deckelumfang vorgesehen werden oder kann dessen Rand mit Öffnungen/Schlitzen versehen werden.

Es ist bereits aus Fig. 1 ohne weiteres zu erkennen, daß der gezeigte, eine Kühlmittelleitung integrierende Verbund aus Schälradhalter 5 und Schälrad 2 es ermöglicht, daß auf eine Kühlmittelzuführung von außen gänzlich verzichtet werden kann, da sie werkzeugseitig her realisiert ist. Eine erfindungsgemäß ausgestaltete, allerdings nicht dargestellte Wälzschälmaschine weist daher bevorzugt keine störende äußere Kühlmittelzufuhr mehr auf, der entsprechende Bauraum ist einsparbar. Es können jedoch die oben erläuterten zusätzlichen externen, vorrangig der Spülung dienenden Leitungen vorgesehen werden. Diese können auch in einem den Werkzeugwechsel nicht mehr beeinträchtigenden und/oder nach einem solchen nicht eine Neuausrichtung erfordernden Abstand angeordnet werden.

In Fig. 2 ist noch dargestellt, wie der Schälradhalter 5 auf eine Werkzeugspindel 20 aufgespannt ist. Die Werkzeugspindel 20 ist in einem drehfesten Teil 30, beispielsweise einem Abschnitt eines Maschinenbettes drehbar gelagert und kann wie üblich beispielsweise durch einen Direktantrieb drehend angetrieben werden (nicht dargestellt). Das Festspannen erfolgt durch eine zentrale Bohrung in der Werkzeugspindel 20 mittels einer Spanneinrichtung, von der in Fig. 2 nur die distalen Enden einer Spannzange 22 dargestellt sind. Die Erfindung ist jedoch nicht auf eine konkrete Art der Aufspannung eingeschränkt. Wichtig ist lediglich, daß die Kühlmittelzuführung einen passenden Anschluß an die Kühlleitung im Schälradhalter 5 besitzt. In diesem Ausführungsbeispiel ist noch schälradhalterseitig ein Mündungsbereich in Form eines Stutzens 7 vorgesehen, der in eine zentrale Bohrung 28 in der Werkzeugspindel 20 automatisch beim Aufspannen des Schälradhalters 5 eindringt, wobei eine Ringdichtung eine Leckage des Kühlmittels in diesem Bereich verhindert. Am anderen axialen Spindelende erfolgt in diesem Ausführungsbeispiel ein Anschluß an den nicht rotierenden Teil der Kühlmittelleitung des angesetzten Kühlmittelkreislaufes über eine nicht dargestellte Drehdurchführung. Letztere könnte jedoch auch anderswo angeordnet sein.

## Patentansprüche

1. Vorrichtung mit einem zum Wälzschälen von Verzahnungen ausgelegten Schälrad (2) und einer Kühlmittelzufuhr zum Zuführen eines der Abfuhr der beim Wälzschälen einer Verzahnung mittels des um seine Rotationsachse (C2) rotierenden Schälrads (2) erzeugten Wärme dienenden Kühlmittels, wobei die Kühlmittelzufuhr einen Zuführabschnitt (6), der in Projektion auf die Normalenebene der Rotationsachse gesehen achsnäher als die Schälradverzahnung (4) angeordnet ist und eine Erstreckungskomponente in Axialrichtung aufweist, und einen weiteren Zuführabschnitt (8) aufweist, der eine bezüglich der Rotationsachse radial von innen nach außen verlaufende Erstreckungskomponente aufweist, **dadurch gekennzeichnet, dass** wenigstens ein Teil des weiteren Zuführabschnitts (8) von einer flächigen, an der die Schneidkanten tragenden Seite des Schälrads angeordneten Begrenzung (18) begrenzt ist, die sich radial bis in den Bereich der Zähne (4) des Schälrads erstreckt, welche im Treppenschliff ausgebildet sind, wobei der äußere Umfangsrand der flächigen Begrenzung (18) auf den Kanten der Zähne (4) zur Anlage gebracht ist.

2. Vorrichtung nach Anspruch 1, bei der der Zuführabschnitt (6) mit dem Schälrad rotiert.

3. Vorrichtung nach Anspruch 1 oder 2, bei der der Zuführabschnitt (6) durch eine oder mehrere Öffnungen des Schälrades hindurch verläuft.

4. Vorrichtung nach einem der vorhergehenden Ansprüche, bei der Kühlmittel entlang einer Spanfläche (10) des Schälrads zu deren Schneidkante strömt.

5. Vorrichtung nach einem der vorhergehenden Ansprüche, bei der eine Befestigung (16) der Begrenzung bei einer Höhenänderung des Schälrades nachführbar ist.

6. Vorrichtung nach einem der vorhergehenden Ansprüche, bei der ein Befestigungsmittel für die flächige Begrenzung wenigstens einen Teil des Zuführabschnitts (6) begrenzt und insbesondere in Form einer Hohlschraube (16) gebildet ist.

7. Anordnung für das Wälzschälen, aufweisend eine Vorrichtung nach einem der Ansprüche 1 bis 6 und einen das Schälrad haltenden und auf eine Werkzeugspindel einer Wälzschälmaschine aufspannbaren Schälradhalter (5).

8. Anordnung nach Anspruch 7, bei der der Zuführabschnitt (6) wenigstens teilweise durch den Schälradhalter (5) verläuft.

9. Anordnung nach einem der Ansprüche 7 oder 8, die weiter eine die Drehbarkeit des Schälrads gewährleistende Werkzeugspindel (20) aufweist, durch welche die Kühlmittelzufuhr verläuft, die dazu insbesondere eine Drehdurchführung aufweist.

10. Anordnung nach einem der vorhergehenden Ansprüche, die weiter eine das Schälrad oder einen das Schälrad haltenden Schälradhalter aufspannende Spannvorrichtung (22) aufweist.

11. Wälzschälmaschine mit einer Anordnung nach einem der Ansprüche 7 bis 10.

12. Wälzschälverfahren zum Bearbeiten und/oder Erzeugen einer Verzahnung an einem Werkstück, bei dem ein rotierendes Schälrad (2) spanend Material von dem Werkstück abnimmt und man zur Abfuhr der dabei erzeugten Wärme ein Kühlmittel zuführt,
**dadurch gekennzeichnet, dass**
die Zufuhr des Kühlmittels über einen insbesondere mit dem Schälrad (2) rotierenden Zuführabschnitt von der Seite des Schälrads her mittels einer Kühlmittelzufuhr einer Vorrichtung nach einem der Ansprüche 1 bis 6 erfolgt.

13. Wälzschälverfahren nach Anspruch 12, bei dem man Kühlmittel entlang einer Spanfläche des Schälrads (2) zu deren Schneidkanten strömen lässt.

## Claims

1. A system comprising a skiving wheel (2) configured for the skiving of toothings, and a coolant supply for supplying a coolant used to dissipate the heat generated during skiving of a toothing with the skiving wheel (2) rotating around its axis of rotation (C2), wherein the coolant supply includes a supply portion (6) which, as seen in a projection onto a plane extending orthogonal to the axis of rotation, is arranged closer to the axis than the toothing of the skiving wheel (4) and has an extension component in the axial direction, and a further supply portion (8) which has an extension component in a radial inward-outward direction relative to the axis of rotation, **characterised in that** at least a part of the further supply portion (8) is delimited by an extensive delimitation (18) that is arranged on the side of the skiving wheel that carries the cutting edges, and that extends radially through to the area of the teeth (4) of the skiving wheel, which are step-sharpened, wherein the outer peripheral edge of the extensive delimitation (18) are made to rest against the edges of the teeth (4).

2. The system according to claim 1, wherein the supply portion (6) rotates together with the skiving wheel.

3. The system according to claim 1 or 2, wherein the supply portion (6) extends through one or more openings of the skiving wheel.

4. The system according to one of the preceding claims, wherein the coolant flows along a cutting surface (10) of the skiving wheel through to its cutting edge.

5. The system according to one of the preceding claims, wherein a fastening (16) for the delimitation is adjustable to adapt to a change in height of the skiving wheel.

6. The system according to one of the preceding claims, wherein a fastener for the extensive delimitation delimits at least a part of the supply portion (6) and is formed in particular as a hollow bolt (16).

7. An assembly for a skiving process, including a system according to one of claims 1 to 6 and a skiving wheel holder (5) carrying the skiving wheel and able to be clamped to a tool spindle of a skiving machine.

8. The assembly according to claim 7, wherein the supply portion (6) extends at least partially through the skiving wheel holder (5).

9. The assembly according to one of claims 7 and 8, further including a tool spindle (20) which provides the rotation of the skiving wheel and through which the coolant supply extends, for the purpose of which it includes in particular a rotary coupling.

10. The assembly according to one of the preceding claims, further including a clamping device (22) to clamp the skiving wheel or to clamp a skiving wheel holder carrying the skiving wheel.

11. A skiving machine comprising an assembly according to one of claims 7 to 10.

12. A skiving method for machining and/or generating a toothing on a workpiece, wherein a rotating skiving wheel (2) removes material from the workpiece and a coolant is allowed to be supplied to dissipate the heat generated in the process,
**characterised in that**
the supply of coolant is carried out via a supply portion, which in particular rotates together with the skiving wheel (2), from the side of the skiving wheel, using a coolant supply of a system according to one of claims 1 to 6.

13. The skiving method according to claim 12, wherein a coolant is allowed to flow along a cutting surface of the skiving wheel (2) through to its cutting edges.

## Revendications

1. Dispositif comportant une roue de taillage (2) conçue pour tailler des dentures en développante et un dispositif d'apport de fluide de refroidissement destiné à l'apport d'un fluide de refroidissement servant à dissiper la chaleur produite lors du taillage d'une denture par la roue de taillage (2) en rotation sur son axe de rotation (C2), ledit dispositif d'apport de fluide de refroidissement présentant une section d'apport (6) qui, vue en projection sur le plan normal de l'axe de rotation, est plus proche de l'axe que ne l'est la denture (4) de la roue de taillage et qui présente une composante d'étendue dans le sens axial, et une autre section d'apport (8) qui présente une composante d'étendue dirigée radialement dans le sens intérieur-extérieur par rapport à l'axe de rotation ; **caractérisé en ce qu'**au moins une partie de l'autre section d'apport (8) est délimitée par une délimitation (18) de grande étendue qui est disposée du côté de la roue de taillage portant les tranchants et qui s'étend radialement jusqu'à proximité des dents (4) de la roue de taillage conçues de manière hélicoïdale, le bord circonférentiel extérieur de la délimitation (18) de grande étendue venant au contact des bords des dents (4).

2. Dispositif selon la revendication 1, dans lequel la section d'apport (6) tourne conjointement avec la roue de taillage.

3. Dispositif selon la revendication 1 ou 2, dans lequel la section d'apport (6) traverse une ou plusieurs ouvertures de la roue de taillage.

4. Dispositif selon l'une quelconque des revendications précédentes, dans lequel du fluide de refroidissement s'écoule le long d'une surface de coupe (10) de la roue de taillage jusqu'à son tranchant.

5. Dispositif selon l'une quelconque des revendications précédentes, dans lequel une fixation (16) de la délimitation est adaptable au changement en hauteur de la roue de taillage.

6. Dispositif selon l'une quelconque des revendications précédentes, dans lequel un moyen de fixation destiné à la délimitation de grande étendue délimite au moins une partie de la section d'apport (6) et est notamment formé à la manière d'une vis creuse (16).

7. Système de taillage par génération en développante, présentant un dispositif selon l'une des revendications 1 à 6 et un support de roue de taillage (5) portant la roue de taillage et susceptible d'être serré sur une broche porte-outil d'une machine de taillage en développante.

8. Système selon la revendication 7, dans lequel la section d'apport (6) traverse au moins partiellement le support de roue de taillage (5).

9. Système selon l'une des revendications 7 et 8, présentant en outre une broche porte-outil (20) assurant la faculté de rotation de la roue de taillage et à travers laquelle passe le dispositif d'apport de fluide de refroidissement et qui présente notamment à cet effet un joint rotatif.

10. Système selon l'une quelconque des revendications précédentes, présentant en outre un dispositif de serrage (22) serrant la roue de taillage ou serrant un dispositif de support de roue de taillage portant la roue de taillage.

11. Machine de taillage en développante comportant un système selon l'une des revendications 7 à 10.

12. Procédé de taillage en développante visant à usiner et/ou produire une denture sur une pièce à usiner, dans le cadre duquel une roue de taillage (2) en rotation taille la pièce à usiner par enlèvement de copeaux et en ce qu'on apporte du fluide de refroidissement afin de dissiper la chaleur produite au cours de ce processus,
**caractérisé en ce que**
l'apport du fluide de refroidissement s'effectue par le biais d'une section d'apport tournant notamment conjointement avec la roue de taillage (2), depuis le côté de la roue de taillage, au moyen d'un dispositif d'apport de fluide de refroidissement d'un dispositif selon l'une des revendications 1 à 6.

13. Procédé de génération en développante selon la revendication 12, dans lequel on fait s'écouler du fluide de refroidissement le long d'une surface de coupe de la roue de taillage (2) jusqu'à ses tranchants.
